# EUROPÄISCHE PATENTANMELDUNG

(11) **EP 0 821 525 A1**
(43) Veröffentlichungstag der Anmeldung: **28.01.1998**
(21) Anmeldenummer: 96440056.8
(22) Anmeldetag: 26.07.1996
(51) Int. Cl.: H04N 7/14

(54) **Vorrichtung zum Empfangen und Senden von Videonachrichten, von Sprachnachrichten und von Textnachrichten**

(71) Anmelder: ALCATEL ALSTHOM COMPAGNIE GENERALE D'ELECTRICITE, 75008 Paris (FR)
(72) Erfinder: Lecomte, Daniel, 75116 Paris (FR)
(74) Vertreter: Knecht, Ulrich Karl, Dipl.-Ing.

(57) **Zusammenfassung**

Schaffe eine aus einfachen Mitteln zusammengesetzte Vorrichtung, die Video-, Sprach- und Textnachrichten verarbeiten, anzeigen und speichern kann.

Die Vorrichtung hat eine Netzschnittstelle (LI) zum Empfangen und Senden von Videonachrichten, von Textnachrichten, z. B. aus dem Internet, und von Sprachnachrichten. Nach Eintreffen einer Videonachricht kann diese gespeichert werden. Es wird eine Textnachricht oder eine Sprachnachricht dazu erzeugt und der Empfänger wird mittels Aussendung dieser Nachricht davon in Kenntnis gesetzt. Weiter können Videonachrichten eines ersten Bildformates in ein zweites Bildformat gewandelt werden, um es in diesem Bildformat dann anzuzeigen.

## Beschreibung

Die Erfindung betrifft eine Vorrichtung zum Senden und Empfangen von Videonachrichten, von Sprachnachrichten und von Texnachrichten, die über ein Telekommunikationsnetz gesendet werden.

Aus dem Stand der Technik EP 0 666 693 A1 ist beispielsweise ein Videophonsystem bekannt, welches sich aus einer PC Workstation, einer Tastatur oder Maus, einem Bildschirm, einer Kamera und einer Schnittstellenschaltung zur Anpassung zusammensetzt. In einem solchen System wird ein Bild über eine ISDN-Leitung auf die Anpassungsschaltung gegeben, von dieser über eine entsprechende Anpassungsleitung auf den PC übertragen und dort auf dem zugehörigen Bildschirm wiedergegeben. Eine auf dem Bildschirm befindliche Kamera nimmt ein Bild des Benutzers auf, gibt dieses direkt auf die Schnittstellenanpassung und überträgt dieses wiederum über die ISDN-Leitung zu einem weiteren Teilnehmer. Ein solches Videophonsystem kombiniert also eine
Videophoneinrichtung mit einem herkömmlichen PC. Nachteilig erweist sich bei einem solchen System, daß zur Betriebsbereitschaft immer der ganze PC angeschaltet werden muß, und daß das System verhältnismäßig aufwendig realisiert ist. Auch ist damit nur eine sofortige Anzeige eines Videotelefongespräches möglich, also keine Aufzeichnung möglich.

Desweiteren ist aus dem Stand der Technik eine Patentanmeldung JP 3-201649 bekannt, in der ein Videoanrufbeantworter näher erläutert wird. Ein solches Videophonsystem dient zur Antwort eines ankommenden Rufes, wenn der Benutzer nicht anwesend ist. Eine so empfangene Nachricht wird aufgenommen, gleichzeitig wird dem sendenden Teilnehmer eine Nachricht darüber übermittelt, daß diese Nachricht lediglich aufgezeichnet wird. Bei einem solchen System ist es aber notwendig, daß sowohl der sendende als auch der empfangende Teilnehmer dafür empfangsbereite Geräte besitzen.

Demgemäß ist es Aufgabe der vorliegenden Erfindung, eine Vorrichtung zum Senden und Empfangen von Videonachrichten zu schaffen, die sich aus einfachen Mitteln zusammensetzt und zusätzlich in der Lage ist, weitere Nachrichten anderer Formate zu verarbeiten. Eine weitere Aufgabe der Erfindung ist es, die Vorrichtung dergestalt auszugestalten, daß die Nachrichten aufgezeichnet werden können, auch wenn sie der Teilnehmer nicht persönlich entgegennimmt.

Dies wird erfindungsgemäß gelöst durch die Lehre des Anspruchs 1.

Vorteilhaft erweist sich hierbei, auf einer solchen Vorrichtung zum Senden und Empfangen von Videonachrichten auch andere Nachrichten, die z. B. aus dem Internet kommen, angezeigt werden können. Auch können mittels dieser Vorrichtung unterschiedliche Bildstandards angezeigt werden. Daraus folgt, daß ein solches System in vorteilhafter Weise nicht nur in der Lage ist, Bilder eines Standards anzuzeigen, sondern auch in der Lage ist, Bilder eines weiteren Standards anzuzeigen. Vorteilhaft erweist sich ebenfalls, daß in der Funktion als Bildanrufbeantworter ein empfangenes Bild in einem Datenformat gespeichert wird und in einem beliebigen anderen Datenformat über den Monitor wieder ausgegeben werden kann.

Weitere vorteilhafte Ausgestaltungen sind den Ansprüchen 2 bis 10 zu entnehmen.

Als besonderer Vorteil erweist sich hierbei die Ausgestaltung gemäß Patentanspruch 4, bei dem Informationen zu einer gespeicherten Videonachricht hinzugefügt werden können. Damit bleibt es einem später abfragenden Benutzer möglich, genauestens zu erfahren, wann diese Nachricht aufgesprochen wurde, wie lange sie dauert, und an welchem Tag sie aufgesprochen worden ist.

Gemäß Patentanspruch 5 erweist sich als besonders vorteilhaft, daß ein Teilnehmer an einem gewissen vorher festgelegte Aufenthaltsort über den Empfang einer Videonachricht in seiner z.B. am Heimatort befindlichen Vorrichtung informiert werden kann. Somit wird er in die Lage versetzt, zu einer beliebigen Zeit seine Videonachricht abzufragen.

In vorteilhafter Ausgestaltung des Patentanspruchs 8 ergibt sich, daß eine Videonachricht editiert werden kann und weiterverschickt werden kann an weitere Teilnehmer, also mit Kommentaren versehen werden kann. Diese Kommentare können in Form einer Textnachricht oder einer zusätzlichen Videonachricht hinzugefügt werden.

Gemäß Patentanspruch 9 ergibt sich in vorteilhafter Weise, daß ein herkömmliches Fernsehgerät angeschlossen werden kann und auf diesem die Videonachricht wiedergegeben werden kann.

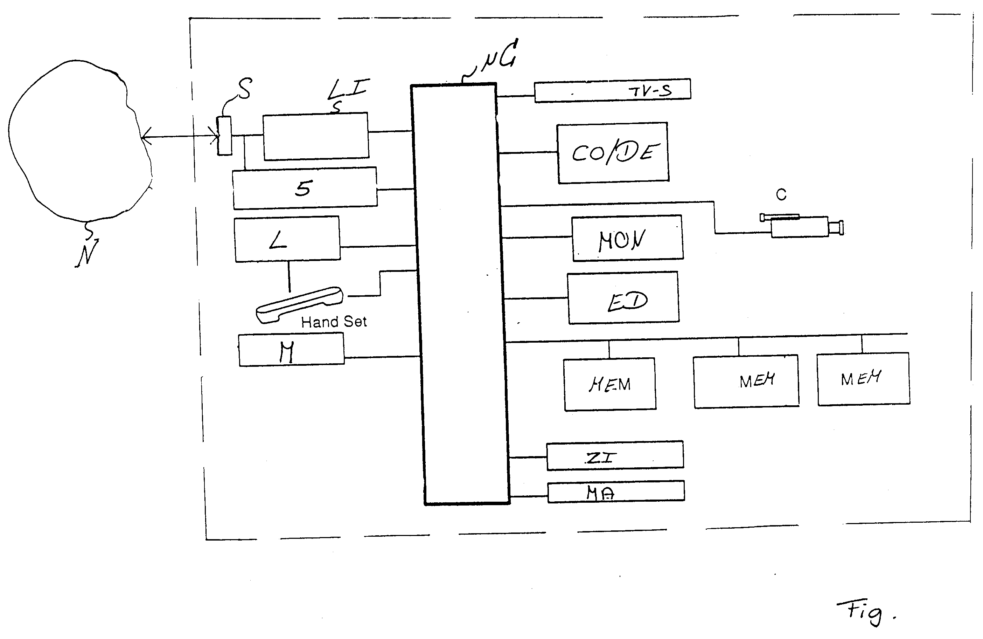

Im folgenden wird die Erfindung anhand eines Ausführungsbeispiels und der Figur näher erläutert. Folgende Figur zeigt
- Figur:: Schematische Darstellung einer Vorrichtung zum Empfangen und Senden von Videonachrichten, von Sprachnachrichten und von Textnachrichten.

Eine Vorrichtung zum Empfangen und Senden von Videonachrichten, von Sprachnachrichten und von Textnachrichten weist eine Schnittstelle S zur Anpassung der Vorrichtung an ein Telekommunikationsnetz auf. Ein solches Telekommunikationsnetz N ist beispielsweise das ISDN-Netz. Über die Schnittstelle S wird die Vorrichtung mit dem Netz N, im folgenden ISDN-Netz genannt, verbunden. Hierzu kann eine Standardschnittstelle S verwendet werden. Diese Schnittstelle S ist weiter mit einer Netzschnittstelle LI zur Anpassung der Vorrichtung an, mit verschiedenen Übertragungsraten gesendeten und empfangenen Nachrichten verbunden. Diese Netzschnittstelle enthält beispielsweise ein Modem, welches die Vorrichtung in die Lage versetzt, unterschiedliche Datenübertragungsraten zu verarbeiten, also bis zu mehreren Kbit/s. Zum Beispiel ist ein solches Modem in der Lage, Übertragungsraten wie sie im Internet auftreten zu verarbeiten. In einer weiteren Ausgestaltung kann dieses Modem in Form einer digitalen Schnittstelle gemäß des ISDN-Standards ausgebildet sein.

Desweiteren ist mit der Schnittstelle S zur Anpassung der Vorrichtung und der Netzschnittstelle LI zur Anpassung der Vorrichtung ein Schnittstellenschaltkreis 5 zur Spannungsversorgung in der Vorrichtung vorgesehen. Dieser kann beispielsweise in Form einer Batterie ausgebildet sein, so daß eine Vorrichtung zum Empfangen und Senden von Videonachrichten stets einsatzbereit ist.

Desweiteren kann die Vorrichtung zum Empfangen und Senden mit einer Kamera C zur Aufnahme einer Videonachricht ausgestattet sein, um auch selbst eine Videonachricht direkt aufzunehmen. Diese Kamera C kann in die Vorrichtung integriert sein. Ebenfalls kann aber auch die Kamera aus einer herkömmlichen Kamera bestehen und über eine Einsteckvorrichtung mit der Vorrichtung zum Empfangen und Senden von Videonachrichten verbunden werden. Desweiteren besitzt die Vorrichtung zum Empfangen und Senden von Videonachrichten einen Bildschirm MON zur Wiedergabe einer Videonachricht und zur Wiedergabe einer Textnachricht. Desweiteren setzt sich die Vorrichtung zum Empfangen und Senden einer Videonachricht aus einem Lautsprecher L und einem Mikrofon M zur Aufnahme und Wiedergabe einer Sprachnachricht oder der einer Video- oder Textnachricht zugeordneten Sprache zusammen. Dieser Lautsprecher L und das Mikrofon M können in Form eines Hörers ausgebildet sein.

Zur Speicherung einer ankommenden Videonachricht, die später abgespielt werden soll, werden Speichermittel MEM zum Speichern der empfangenen Videonachricht in der Vorrichtung zum Empfangen und Senden von Videonachrichten vorgesehen. Ebenfalls vorgesehen sind Mittel ZI zum Hinzufügen von Informationen zu der gespeicherten Videonachricht. Mittels dieser Mittel werden beispielsweise die Uhrzeit, das Datum, die Länge der Nachricht und weitere Informationen der gespeicherten Videonachricht hinzugefügt.

Ebenfalls in der Vorrichtung vorgesehen sind Mittel MA zum Speichern eines Aufenthaltsortes des Empfängers. In diesen Mitteln MA zum Speichern des Aufenthaltsortes wird die Nummer des derzeitigen Aufenthaltsortes des Empfängers gespeichert oder liegt als Liste vor aus der dann die Nummer ausgewählt wird, um bei Empfang einer Videonachricht, eine Sprach- oder Textnachricht an den Aufenthaltsort des Empfängers über das Vorhandensein der Videonachricht eine Nachricht zu senden. Demgemäß ist ein Empfänger jederzeit informiert, ob für ihn eine Nachricht gesendet worden ist.

Desweiteren befinden sich in der Vorrichtung ein Coder/Decoder CO/DE zur Umsetzung eines H.261-codierten Bildes in ein MPEG-codiertes Bild und umgekehrt. Dieser Coder/Decoder DO/DE ist generell so ausgelegt, daß er die Umsetzung eines codierten Bildes eines ersten Standards in ein codiertes Bild eines weiteren Standards vornimmt. Hierbei sind auch Umsetzungen des H.320-Standards in einem MPEG-Standard oder ähnliche Standards möglich. Hierbei ist folgender Ablauf vorstellbar: Ein H.261-codiertes Bild liegt vor, wobei das H.261-codierte Bild in zwei unterschiedlichen Bildformaten vorliegen kann. Dieses wird auf einen Decoder gegeben, der das Bild auf die Bildebene zurücktransformiert. Dann wird das so decodierte Bild auf einen MPEG-Codierer gegeben, der das Bild MPEG-codiert. MPEG verfügt über eine Vielzahl von Bildformaten. Eine solche Vorgehensweise ist auch in der umgekehrten Richtung möglich. Hierbei ist darauf zu achten, daß die Bildwiederholfrequenz bei MPEG fest definiert ist.

Hierbei erweist sich als vorteilhaft, daß eine empfangende Vorrichtung nicht notwendigerweise im Bildformat kompatibel zu einer sendenden Vorrichtung sein muß.

In der Vorrichtung sind zusätzliche Editiermittel ED vorhanden zum Editieren einer Videonachricht. Hierbei wird beispielsweise zusätzlich zu der Videonachricht eine Textnachricht aufgesprochen oder ein Kommentar mittels Textnachricht hinzugefügt. Auch können Teile der Nachricht ausgeschnitten werden, um diese dann weiterzuversenden.

Da aus den vorgegebenen Mitteln zum Umsetzen eines Bildes eines ersten Standards in einen anderen Standard es auch möglich ist, eine Wiedergabe auf einem Fernsehgerät zu gewährleisten, befindet sich in der Vorrichtung eine Schnittstelle TV-S zum Anschließen eines Fernsehgerätes zur Wiedergabe der Videonachricht auf derselben.

Wichtig bei der vorliegenden Erfindung ist es auch, daß die Netzschnittstelle LI eine Anpassung an Textnachrichten vom Typ Internet und an Sprachnachrichten aus dem Telekommunikationsnetz, dem ISDN-Netz vornimmt. Dadurch versetzt die Netzschnittstelle LI die Vorrichtung zum Empfangen und Senden einer Videonachricht, einer Sprachnachricht und einer Textnachricht in die Lage, sowohl Textnachrichten aus dem Internet zu senden und zu empfangen, als auch Sprachnachrichten über das Telekommunikationsnetz, besser gesagt das ISDN-Netz, zu versenden.

Bei der Verwendung der Vorrichtung zum Empfangen und Senden von Videonachrichten, von Sprachnachrichten und von Textnachrichten kann man sich folgende Verwendung vorstellen: Die Vorrichtung empfängt eine Videonachricht, speichert diese und registriert das Vorhandensein einer Videonachricht. Über das Vorhandensein der Nachricht wird ein Empfänger informiert, indem ihm eine E-Mail über das Internet zugesendet wird. Zukünftig kann sich auch noch vorgestellt werden, daß die Videonachricht über das Leistungsmerkmal der Videoübertragung über das Internet einem Empfänger nachgesendet werden kann.

## Patentansprüche

1. Vorrichtung zum Empfangen und Senden von Videonachrichten, von Sprachnachrichten und von Textnachrichten
- mit einer Schnittstelle (S) zur Anpassung der Vorrichtung an ein Telekommunikationsnetz (N),
- mit einer Netzschnittstelle (LI) zur Anpassung der Vorrichtung an mit verschiedenen Übertragungsraten zu sendende und zu empfangende Nachrichten,
- mit einem Bildschirm (MON) zur Wiedergabe einer Videonachricht und zur Wiedergabe einer Textnachricht,
- mit einem Lautsprecher (L) und einem Mikrofon (M) zur Aufnahme und Wiedergabe einer Sprachnachricht oder der einer Video- oder Textnachricht zugeordneten Sprache.

2. Vorrichtung nach Anspruch 1 mit einer Kamera (C) zur Aufnahme einer Videonachricht.

3. Vorrichtung nach Anspruch 1 oder 2, mit Speichermitteln (MEM) zum Speichern einer empfangenen Videonachricht zum späteren Wiedergeben der Videonachricht.

4. Vorrichtung nach Anspruch 3, mit Mitteln (ZI) zum Hinzufügen von Informationen zu der gespeicherten Videonachricht.

5. Vorrichtung nach Anspruch 3 oder 4, mit Mitteln (MA) zum Speichern eines Aufenthaltsortes des Empfängers, bei der nach dem Empfangen einer Videonachricht eine Sprach- oder Textnachricht an den Aufenthaltsort des Empfängers gesendet wird zur Information über das Vorhandensein der Videonachricht.

6. Vorrichtung nach einem der Ansprüche 1 bis 5, mit einem Coder/Decoder (CO/DE) zum Umsetzen eines codierten Bildes eines ersten Standards in ein codiertes Bild eines weiteren Standards.

7. Vorrichtung nach Anspruch 6, bei der der Coder/Decoder (CO/DE) eine Umsetzung eines H.261 codierten Bildes in ein MPEG codiertes Bildes vornimmt oder bei der der Coder/Decoder (CO/DE) eine Umsetzung eines MPEG codierten Bildes in ein H.261 codiertes Bild vornimmt.

8. Vorrichtung nach einem der Ansprüche 1 bis 7, bei der Editiermittel (ED) vorhanden sind zum Editieren einer Videonachricht.

9. Vorrichtung noch einem der Ansprüche 1 bis 8, mit einer Schnittstelle (TV-S) zum Anschließen eines Fernsehgerätes, zur Wiedergabe einer Videonachricht auf derselben.

10. Vorrichtung nach Anspruch 1, bei der die Netzschnittstelle (LI) eine Anpassung an Textnachrichten vom Typ Internet oder an Sprachnachrichten aus dem Telekommunikationsnetz vornimmt.
